# EUROPÄISCHE PATENTSCHRIFT

(11) **EP 3 587 702 B1**
(45) Veröffentlichungstag und Bekanntmachung des Hinweises auf die Patenterteilung: **17.11.2021**
(21) Anmeldenummer: 19181178.5
(22) Anmeldetag: 19.06.2019
(51) Int. Cl.: E04F 13/08, E04B 1/76, F24S 25/61, H02S 20/22, H02S 20/26

(54) **BEFESTIGUNGSVORRICHTUNG UND VERFAHREN ZU DEREN HERSTELLUNG UND VERWENDUNG**
FIXING DEVICE AND METHODS FOR THE MANUFACTURE AND USE THEREOF
DISPOSITIF DE FIXATION, SON PROCÉDÉ DE FABRICATION ET SON UTILISATION

(30) Priorität: 21.06.2018 DE 102018210096
(43) Veröffentlichungstag der Anmeldung: 01.01.2020
(73) Patentinhaber: FRAUNHOFER-GESELLSCHAFT zur Förderung der angewandten Forschung e.V., 80686 München (DE)
(72) Erfinder: Maurer, Christoph, 79110 Freiburg (DE)
(74) Vertreter: Friese Goeden Patentanwälte PartGmbB

(56) Entgegenhaltungen:
- EP-A2- 2 500 480
- CH-A2- 713 902
- US-A1- 2017 362 816

## Beschreibung

Die Erfindung betrifft eine Befestigungsvorrichtung zur Montage eines Gegenstandes an einem Gebäude, mit einem Schaft mit einem ersten Ende und einem zweiten Ende, wobei der Schaft dazu eingerichtet ist, vom Gegenstand in die Befestigungsvorrichtung eingeleitete Kräfte über das Gebäude abzutragen. Weiterhin betrifft die Erfindung die Verwendung einer solchen Vorrichtung sowie ein Verfahren zur deren Herstellung. Befestigungsvorrichtungen der eingangs genannten Art können beispielsweise zur Befestigung von Fassadenelementen oder Photovoltaikmodulen dienen.

Aus der Praxis sind Befestigungsvorrichtungen bekannt, deren Schaft aus einem Metall oder einer Legierung besteht, beispielsweise aus Stahl. Das erste Ende des Schaftes kann im Mauerwerk verankert werden, beispielsweise mittels eines Spreizdübels oder durch eine Klebeverbindung. Am gegenüberliegenden zweiten Seite kann ein Fassadenelement aus Glas, Stein oder Keramik oder auch ein Photovoltaikmodul befestigt sein.

Diese bekannten Befestigungsvorrichtungen weisen den Nachteil auf, dass der Schaft eine vergleichsweise gute Wärmeleitfähigkeit aufweist und auf diese Weise sehr effizient Wärme aus dem Mauerwerk an die Umgebung ableitet. Hierdurch steigt die Heizenergie des Gebäudes an. Wird das Gebäude im Sommer klimatisiert, so bewirkt der metallische Schaft weiterhin einen unerwünschten Wärmeeintrag, welcher von der Klimatisierungseinrichtung kompensiert werden muss. Zur Lösung dieses Problems ist bekannt, den Schaft aus Kunststoff zu fertigen. Hierdurch sinkt die Wärmeleitfähigkeit des Schaftes, sodass unerwünschte Wärmeströme in das bzw. aus dem Gebäude reduziert werden können. Diese Befestigungsvorrichtungen haben jedoch den Nachteil, dass sie im Brandfall versagen und die daran befestigten Gegenstände herunterfallen. Im Brandfall werden somit Bewohner und Retter nicht nur durch Rauchgase und Hitze gefährdet, sondern zusätzlich durch herabfallende Gebäudeteile.

Die EP 2 500 480 A2 offenbart eine Befestigungsvorrichtung nach dem Oberbegriff des Anspruchs 1 und beschreibt eine Konsole mit einem eine Auflagefläche aufweisenden Auflageanker, welche an einer Anlage fixierbar ist, mit einem Befestigungsanker für den Kraftangriff eines mit dem Befestigungsanker verbindbaren Bauteils, wobei der Befestigungsanker so mit dem Auflageanker zusammenwirkt, dass Kräfte übertragen werden, wobei eine über den Befestigungsanker eingeleitete Kraft im an der Anlage montiertem Zustand über die Auflagefläche des Auflageankers flächig auf die Anlage übertragbar ist, der Auflageanker und der Befestigungsanker thermisch voneinander durch einen Dämmkörper entkoppelt sind.

Ausgehend vom Stand der Technik liegt der Erfindung somit die Aufgabe zugrunde, eine Befestigungsvorrichtung und ein Verfahren zu ihrer Herstellung anzugeben, welche einerseits eine geringe Wärmeleitfähigkeit aufweist und andererseits brandsicher ist.

Die Aufgabe wird erfindungsgemäß durch eine Vorrichtung gemäß Anspruch 1, eine Verwendung nach Anspruch 9 und ein Verfahren nach Anspruch 10 gelöst. Vorteilhafte Weiterbildungen der Erfindung finden sich in den Unteransprüchen. Erfindungsgemäß wird eine Befestigungsvorrichtung zur Montage eines Gegenstandes an einem Gebäude vorgeschlagen. Das Gebäude kann in einigen Ausführungsformen der Erfindung in Massivbauweise errichtet sein, beispielsweise aus Mauerwerk oder Beton. In anderen Ausführungsformen der Erfindung kann das Gebäude in Leichtbauweise gefertigt werden, beispielsweise als Holzständerbau. Bei dem am Gebäude zu befestigenden Gegenstand kann es sich beispielsweise um ein Fassadenelement handeln. Ein solches Fassadenelement kann aus Naturstein, Glas oder Keramik hergestellt sein und der Gebäudefassade ein ansprechendes Äußeres verleihen sowie eine hinter dem Fassadenelement angebrachte Wärmedämmung vor Witterungseinflüssen schützen. In anderen Ausführungsformen der Erfindung kann der Gegenstand ein photovoltaischer oder thermischer Solarkollektor sein, welcher es ermöglicht, Dach- oder Fassadenflächen zur Energiegewinnung zu nutzen. Daneben kann auch ein solches Solarmodul dazu eingerichtet sein, die außen an der Fassade befindliche Wärmedämmung vor Witterungseinflüssen zu schützen, insbesondere vor Schlagregen und Wind. Es ist jedoch darauf hinzuweisen, dass die Erfindung nicht auf diese Gegenstände beschränkt ist. Die vorgeschlagene Befestigungsvorrichtung kann universell zur Wand- oder Deckenmontage von Bauteilen in oder an Gebäuden Verwendung finden.

Die erfindungsgemäße Befestigungsvorrichtung weist einen Schaft auf, welcher ein erstes Ende und ein gegenüberliegendes zweites Ende aufweist. Der Schaft kann in einigen Ausführungsformen der Erfindung gerade ausgeführt sein. Der Schaft ist dazu eingerichtet, vom Gegenstand in die Befestigungsvorrichtung eingeleitete Kräfte über das Gebäude abzutragen. Hierzu ist der Schaft mit dem ersten Ende am Gebäude befestigt. Hierzu kann das erste Ende beispielsweise ein Gewinde aufweisen, welches das Einschrauben des Schaftes in einen Holzträger oder in ein mit einem an sich bekannten Dübel versehenes Bohrloch in Beton oder Mauerwerk ermöglicht. Das gegenüberliegende zweite Ende kann ebenfalls mit einem Gewinde versehen sein, auf welches der zu befestigende Gegenstand aufgeschraubt wird. In anderen Ausführungsformen der Erfindung kann das zweite Ende einen Haken, eine Flanschplatte, eine Halteplatte oder eine andere, an sich bekannte Einrichtung aufweisen, welche die Befestigung eines Gegenstandes ermöglicht. Auf diese Weise können sowohl das Eigengewicht des Gegenstandes als auch auf den Gegenstand einwirkende Kräfte auf das Tragwerk des Gebäudes übertragen werden, sodass der Gegenstand sicher an der ihm zugedachten Stelle gehalten wird.

Erfindungsgemäß wird nun vorgeschlagen, dass der Schaft aus Kunststoff gefertigt wird. Der Schaft enthält somit zumindest ein Polymer. Das Polymer kann ausgewählt sein aus einem Thermoplast oder einem Duroplast. Beispielsweise kann der Schaft Epoxidharz und/oder Polyesterharz und/oder Polyamid und/oder Polyethylen und/oder Polyimid enthalten oder daraus bestehen. Optional kann der Schaft weiterhin eine Faserverstärkung enthalten. Die Verstärkungsfasern der Faserverstärkung können ausgewählt sein aus Glasfasern und/oder Kohlefasern und/oder Polyamid-Fasern, beispielsweise Poly(p-phenylenterephthalamid) oder Poly(m-phenylen-isophthalamid). Eine solche Faserverstärkung kann die vom Schaft übertragbaren Zugkräfte erhöhen und somit die Betriebsfestigkeit der Befestigungsvorrichtung erhöhen. Durch die Fertigung aus wahlweise faserverstärktem Kunststoff weist der Schaft eine vergleichsweise geringe thermische Leitfähigkeit bzw. einen hohen Wärmewiderstand auf. Unerwünschte Wärmeströme aus dem Innenraum des Gebäudes in den das Gebäude umgebenden Außenraum werden somit vermieden oder zumindest reduziert.

Erfindungsgemäß wird nun vorgeschlagen, dass entlang des Schaftes zusätzlich eine Fangvorrichtung verläuft, welche dazu eingerichtet ist, im Falle des Versagens des Schaftes die vom Gegenstand in die Befestigungsvorrichtung eingeleiteten Kräfte über das Gebäude abzutragen. Die Fangvorrichtung verhindert somit das Herunterfallen des befestigten Gegenstandes, wenn der Schaft diese Aufgabe nicht mehr erfüllen kann, beispielsweise im Brandfall bei Beschädigung durch einwirkende Hitze oder durch Materialermüdung bei langem Gebrauch. Die Fangvorrichtung vermeidet somit die Gefährdung von Bewohnern und Rettungskräften durch herabfallende Gegenstände, insbesondere Fassadenteile oder Dacheindeckungen.

Grundprinzip der Erfindung ist es, die mechanische Halterung im Normalbetrieb und die mechanische Halterung im Brandfall bzw. bei Versagen des Schaftes zu trennen. Auf diese Weise ist eine niedrigere thermische Leitfähigkeit der Befestigungsvorrichtung im Normalbetrieb zu erreichen. Dies gelingt zum einen durch die Verlängerung der Wegstrecke der Fangvorrichtung und andererseits durch die Flexibilität der Fangvorrichtung, sodass Kräfte in Längsrichtung der Fangvorrichtung wirken statt unter einem ungünstigen Winkel. Hierdurch kann die Fangvorrichtung einen geringeren Querschnitt aufweisen als eine an sich bekannte Befestigungsvorrichtung mit metallischem Schaft. Durch die größere Länge und/oder den geringeren Querschnitt reduziert sich somit der Wärmestrom, welcher durch die Fangvorrichtung aus dem Gebäude ausgetragen bzw. im Sommer eingetragen wird. Der im Normalbetrieb unter ungünstigem Winkel belastete Schaft hat demgegenüber eine größere Querschnittsfläche, aber aufgrund der Materialwahl einen vergleichsweise großen Wärmewiderstand.

In einigen Ausführungsformen der Erfindung kann die Fangvorrichtung ein Metall oder eine Legierung enthalten oder daraus bestehen. In einigen Ausführungsformen der Erfindung kann die Fangvorrichtung einen Edelstahl enthalten oder daraus bestehen. Eine solche Fangvorrichtung weist einerseits vergleichsweise hohe Haltekräfte bei geringem Querschnitt auf. Darüber hinaus kann ein Metall oder eine Legierung so gewählt werden, dass dieses eine vergleichsweise schlechte Wärmeleitfähigkeit aufweist, sodass der zusätzliche Wärmeaustrag durch die Fangvorrichtung die Gesamtwärmeleitfähigkeit der Befestigungsvorrichtung nicht zu stark beeinträchtigt.

In einigen Ausführungsformen der Erfindung kann die Fangvorrichtung eine größere Länge und/oder eine kleinere Querschnittsfläche aufweisen als der Schaft. Auf diese Weise kann der Schaft, welcher die Kräfte in Normalbetrieb aufnimmt, einen vergleichsweise großen Querschnitt aufweisen und somit auch für ungünstige Belastungsrichtungen ausgelegt werden, beispielsweise bei horizontaler Ausrichtung. Die Fangvorrichtung, welche aufgrund des kleineren Querschnitts nur geringere mechanische Kräfte aufnehmen kann, kann so ausgelegt werden, dass diese nur entlang ihrer Längserstreckung belastet wird. Bei dieser günstigeren Belastungsrichtung kann der geringere Querschnitt ausreichen, welcher auch in einer geringeren Wärmeleitfähigkeit resultiert. Dies führt zwar dazu, dass die befestigten Gegenstände bei Versagen des Schaftes nicht mehr in ihrer ursprünglichen Stellung gehalten werden, sondern der Schwerkraft folgend einige Zentimeter abrutschen. Ein Herunterfallen wird jedoch durch die Fangvorrichtung zuverlässig vermieden. Eine weitere Vergrößerung des Wärmewiderstandes bzw. eine Reduktion der Wärmeverluste durch die Fangvorrichtung kann dadurch erzielt werden, dass die Fangvorrichtung eine größere Länge aufweist als der Schaft. Hierzu kann die Fangvorrichtung zumindest abschnittsweise mäanderförmig oder spiralförmig im oder am Schaft entlang verlaufen.

In einigen Ausführungsformen der Erfindung kann die Fangvorrichtung eine Kette oder ein Draht oder ein Geflecht oder ein Gewirk sein oder enthalten.

In einigen Ausführungsformen der Erfindung kann die Fangvorrichtung zumindest teilweise in das Material des Schaftes eingebettet sein. Insbesondere bei Herstellung des Schaftes in einem Spritzgussverfahren kann die vorbereitete Fangvorrichtung zu Beginn des Spritzgussverfahrenes in die Spritzgussform eingelegt und nachfolgend mit Kunststoff umspritzt werden. In einigen Ausführungsformen der Erfindung kann auch die Faserverstärkung des Schaftes zusammen mit der Kunststoffmatrix eingespritzt werden. In anderen Ausführungsformen der Erfindung können Verstärkungsfasern zusammen mit der Fangvorrichtung in das Spritzgusswerkzeug eingelegt werden. Die Verstärkungsfasern können hierzu vorher mit Matrixkunststoff imprägniert werden und als Prepreg weiterverarbeitet werden, was besonders hohe Faserfüllgrade und gute Festigkeitswerte ermöglicht.

In einigen Ausführungsformen der Erfindung kann das erste Ende und/oder das zweite Ende des Schaftes mit einer Gewindehülse aus einem Metall oder einer Legierung versehen sein. Eine solche Gewindehülse kann nach Herstellen des Schaftes mit diesem verbunden werden, beispielsweise durch Kleben oder Aufpressen. In anderen Ausführungsformen der Erfindung kann auch die Gewindehülse in das Spritzgusswerkzeug eingelegt werden oder Teil des Spritzgusswerkzeuges sein, sodass der Schaft mit seinem ersten Ende unmittelbar bei seiner Herstellung mit der Gewindehülse verbunden wird. Die Gewindehülse kann ein Außengewinde aufweisen, beispielsweise ein metrisches Gewinde, ein Holzgewinde oder ein selbstschneidendes Gewinde. Hiermit kann der Schaft mit seinem ersten Ende in einen Holzträger oder einen Dübel oder eine Gewindebohrung eines Strahlträgers eingeschraubt werden. Eine solche Gewindehülse kann ein stabileres Gewinde bereitstellen als ein unmittelbar auf den Schaft aufgebrachtes Gewinde und dadurch die Belastbarkeit der Befestigungsvorrichtung erhöhen.

In einigen Ausführungsformen der Erfindung kann das erste Ende und/oder das zweite Ende des Schaftes einem Schlagdübelkopf versehen sein. Dies erlaubt die einfache Montage ohne aufwändige Schraubverbindung durch Einschlagen der Befestigungsvorrichtung.

In einigen Ausführungsformen der Erfindung kann das zweite Ende des Schaftes ebenfalls mit einer Gewindehülse oder mit einer Halteplatte versehen werden. Auch eine solche Halteplatte kann durch Kleben oder Aufpressen mit dem zweiten Ende des Schaftes verbunden oder unmittelbar bei der Fertigung des Schaftes durch Umspritzen mit Matrixkunststoff angeformt werden. An die Halteplatte kann der zu befestigende Gegenstand befestigt werden, beispielsweise durch Verschrauben oder durch formschlüssigen Eingriff entsprechender Befestigungshaken des Gegenstandes. Die Halteplatte kann mit Bohrungen für einen Stirnlochschlüssel und/oder mit einem anderen Antrieb versehen sein, um ein Einschrauben der Befestigungsvorrichtung an der Fassade zu ermöglichen. Der Antrieb kann ausgewählt sein aus einem Innensechskant-, einem Außensechskant-, einem Innenvielzahn-oder einem Kreuz- oder Schlitzantrieb. Alternativ oder zusätzlich kann die Halteplatte Bohrungen mit oder ohne Innengewinde aufweisen, welche das Anschrauben von Gegenständen ermöglichen.

In einigen Ausführungsformen der Erfindung kann der Schaft in eine Dämmplatte eingebettet sein. Dies kann in einigen Ausführungsformen der Erfindung die Verarbeitung der Befestigungsvorrichtung erleichtern. Weiterhin kann die Dämmplatte dazu eingerichtet sein, bei Verformung des Schaftes Kräfte aufzunehmen und über das Gebäude abzutragen. Hierdurch kann die Tragfähigkeit der Befestigungsvorrichtung erhöht sein. Die Dämmplatte kann in einigen Ausführungsformen der Erfindung ein Hartschaum sein oder einen Hartschaum enthalten, beispielsweise Polystyrol. In anderen Ausführungsformen der Erfindung kann die Dämmplatte ein Schaumglas enthalten oder daraus bestehen.

In einigen Ausführungsformen der Erfindung kann der Schaft mit dem Normalenvektor der Dämmplatte einen Winkel von etwa 15° bis etwa 45° oder von etwa 20° bis etwa 30° einschließen. In einigen Ausführungsformen der Erfindung kann der Schaft abwärts geneigt sein. Hierdurch wird die Biegespannung im Schaft reduziert, sodass die Tragfähigkeit und/oder die Betriebsfestigkeit der Befestigungsvorrichtung vergrößert sein kann.

Nachfolgend soll die Erfindung anhand von Figuren ohne Beschränkung des allgemeinen Erfindungsgedankens näher erläutert werden. Dabei zeigt
Figur 1 eine bekannte Befestigungsvorrichtung.
Figur 2 zeigt eine Befestigungsvorrichtung gemäß einer ersten Ausführungsform der Erfindung.
Figur 3 zeigt eine Befestigungsvorrichtung gemäß einer zweiten Ausführungsform der Erfindung.
Figur 4 zeigt eine Befestigungsvorrichtung gemäß einer dritten Ausführungsform der Erfindung.
Figur 5 zeigt einen Herstellungsschritt einer Befestigungsvorrichtung gemäß einer vierten Ausführungsform der Erfindung.
Figur 6 zeigt eine Befestigungsvorrichtung gemäß einer vierten Ausführungsform der Erfindung im Schnitt.
Figur 7 zeigt eine Befestigungsvorrichtung gemäß einer vierten Ausführungsform der Erfindung in der Ansicht.
Figuren 8 bis 14 zeigen Verfahrensschritte zur Montage einer Befestigungsvorrichtung gemäß der vierten Ausführungsform an einem Gebäude.

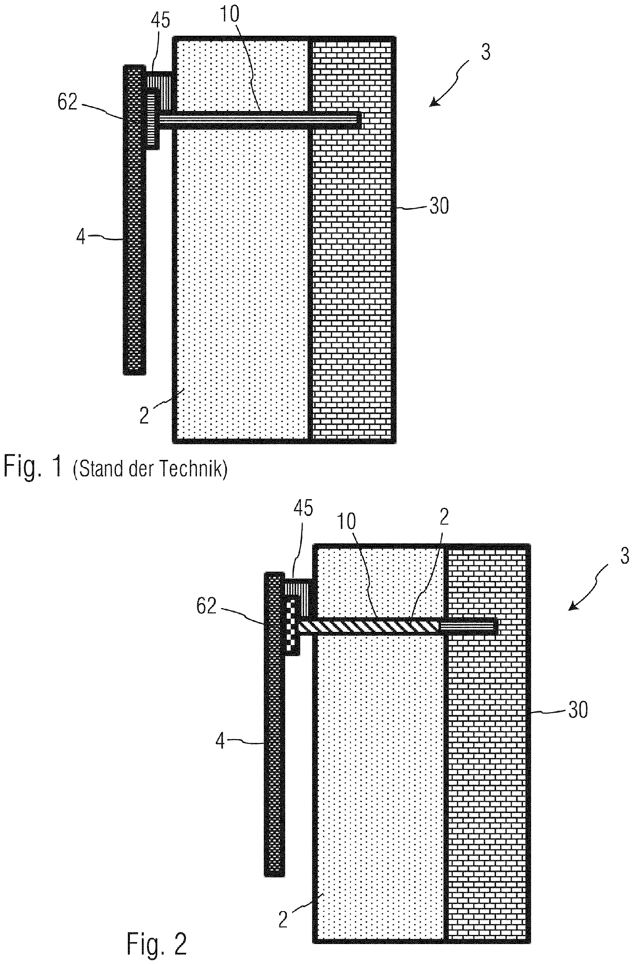

Figur 1 erläutert eine Befestigungsvorrichtung gemäß dem Stand der Technik. Dargestellt ist die Wand 30 eines Gebäudes 3. Im dargestellten Ausführungsbeispiel besteht die Wand 30 aus Mauerwerk. In anderen Ausführungsformen der Erfindung kann die Wand 30 auch aus Beton, Holz oder als Stahlbaukonstruktion hergestellt sein. Die Wand 30 trennt einen Innenraum des Gebäudes 3 von einem das Gebäude umgebenden Außenraum.

Auf der Außenseite der Wand 30 ist eine Dämmung 2 angeordnet. Die Dämmung 2 kann beispielsweise einen Hartschaum, ein Schaumglas, ein Vakuumpaneel, Glaswolle oder Mineralwolle enthalten oder daraus bestehen. Die Dämmung 2 kann in an sich bekannter Weise mit der Wand 30 befestigt sein, beispielsweise durch Verkleben oder Verschrauben. Vor der Dämmung 2 befindet sich ein Gegenstand 4, beispielsweise ein Fassadenelement aus Keramik, Naturstein oder Glas, ein Solarkollektor oder ein Photovoltaikmodul. Der Gegenstand 4 umfasst somit ein Flächengebilde, welches einerseits der ästhetischen Gestaltung des Gebäudes 3 dient und andererseits die Dämmung 2 vor Witterungseinflüssen bewahrt und optional weitere Funktionen übernimmt, beispielsweise die Energiegewinnung.

Auf der Rückseite des Gegenstandes 4 befindet sich ein Haken 45. Der Haken 45 greift in eine Halteplatte 62 ein. Die Halteplatte 62 ist mit einem Schaft 10 verbunden, welcher in einer Bohrung der Wand 3 aufgenommen ist. Der Schaft 10 kann in der Bohrung in an sich bekannter Weise durch Einschrauben in einen Dübel oder durch Verklebung befestigt sein. Falls die Wand 30 Holz oder Stahl enthält, kann der Schaft 10 an seinem Ende auch mit einem Gewinde versehen und unmittelbar eingeschraubt sein.

Die bekannte Befestigungsvorrichtung enthält einen Schaft 10, welcher aus einem Metall oder einer Legierung hergestellt ist. Der Schaft 10 weist somit eine vergleichsweise gute Wärmeleitfähigkeit auf und bildet dadurch eine Kältebrücke in der Dämmung 2. Da die Befestigung der Gegenstände 4 in der Regel eine Vielzahl solcher Befestigungsvorrichtungen benötigt, ist die gesamte Wand 30 mit der Dämmung 2 in regelmäßigem Raster von solchen Kältebrücken durchzogen, welche den Heiz- und/oder Kühlenergiebedarf des Gebäudes 3 nachteilig beeinflussen.

Figur 2 zeigt eine erfindungsgemäße Befestigungsvorrichtung in einer ersten Ausführungsform. Gleiche Bestandteile der Erfindung sind mit gleichen Bezugszeichen versehen, sodass sich die nachfolgende Beschreibung auf die wesentlichen Unterschiede beschränkt.

Erfindungsgemäß wird vorgeschlagen, den Schaft 10 aus einem Material mit niedriger Wärmeleitfähigkeit zu fertigen, beispielsweise einem Kunststoff. Der Kunststoff des Schaftes 10 kann optional eine Faserverstärkung aufweisen, um die mechanische Belastbarkeit und/oder die Dauerfestigkeit zu erhöhen. Durch den höheren Wärmewiderstand des Kunststoffmaterials wird weniger Wärme über den Schaft 10 aus dem Gebäude 3 ausgetragen und der Heiz- oder Kühlenergiebedarf sinkt.

Um zu verhindern, dass bei Beschädigung des Schaftes 10, beispielsweise im Brandfall, die Gegenstände 4 herabstürzen und Personen gefährden, weist die erfindungsgemäße Befestigungsvorrichtung 1 weiterhin eine Fangvorrichtung 2 aus einem Metall oder einer Legierung auf. Die Fangvorrichtung 2 weist eine geringere Querschnittsfläche auf als der Schaft 10. Darüber hinaus kann für die Fangvorrichtung 2 ein Metall gewählt werden, welches einen vergleichsweise hohen Wärmewiderstand aufweist, beispielsweise ein Edelstahl. Aufgrund des geringen Querschnittes und des nur schlecht wärmeleitfähigen Materials wird die Wärmeleitfähigkeit der Befestigungsvorrichtung durch das Vorhandensein der Fangvorrichtung 2 nicht wesentlich erhöht.

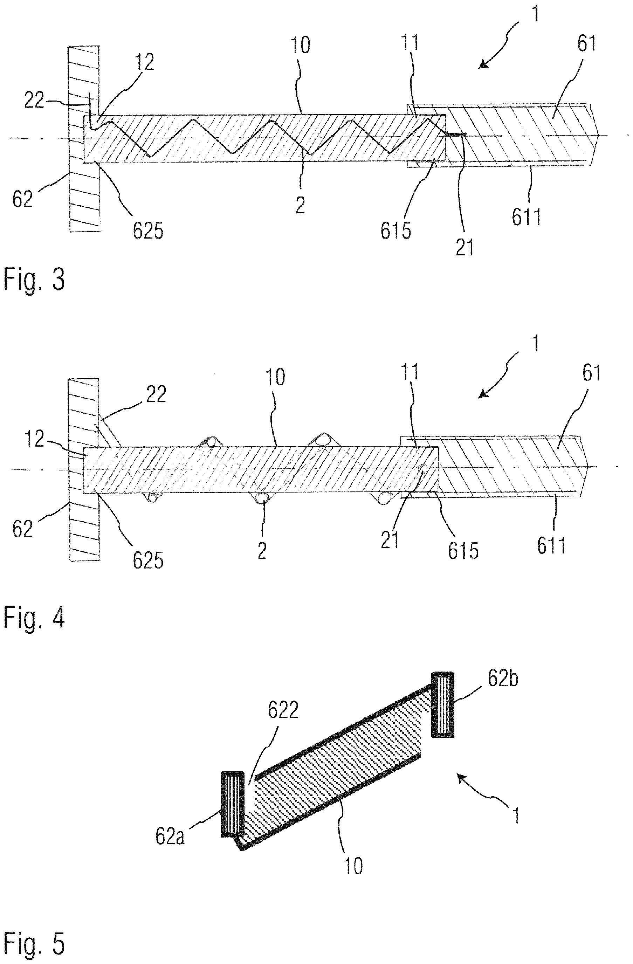

Anhand von Figur 3 wird eine zweite Ausführungsform der Erfindung näher erläutert. Auch in diesem Fall sind gleiche Bestandteile der Erfindung mit gleichen Bezugszeichen versehen. Aus Figur 3 ist ersichtlich, dass der Schaft 10 ein erstes Ende 11 und ein zweites Ende 12 aufweist. Das erste Ende 11 ist mit einer Gewindehülse 61 versehen, welche ein Außengewinde 611 aufweist, mit welchem die Befestigungsvorrichtung 1 in einen Holzträger oder einen Dübel eingeschraubt werden kann. Alternativ oder zusätzlich kann die Gewindehülse 61 mit an sich bekanntem Zwei-Komponenten-Kleber in einer Bohrung der Wand 30 verklebt werden. Dies ermöglicht eine spreizdruckfreie Befestigung, welche auch in der Zugzone eine sichere Befestigung ermöglicht.

Die Gewindehülse 61 weist eine Bohrung 615 auf, welche das erste Ende 11 des Schaftes 10 aufnimmt. Hierzu kann der Schaft 10 nach seiner Herstellung in der Bohrung 615 verklebt werden. In anderen Ausführungsformen der Erfindung kann beim Herstellen des Schaftes 10 durch einen Spritzgussverfahren die Gewindehülse 61 unmittelbar angeformt werden.

Das zweite Ende 12 ist im dargestellten Ausführungsbeispiel mit einer Halteplatte 62 versehen. Die Halteplatte 62 kann ihrerseits wieder nicht dargestellte Gewindebohrungen aufweisen, an welche Gegenstände 4 angeschraubt werden können. In anderen Ausführungsformen der Erfindung kann ein Haken 45 an der Halteplatte 62 angreifen. In wiederum anderen Ausführungsformen der Erfindung kann statt der Halteplatte 62 auch eine Gewindehülse 61 oder ein Haken oder eine andere, an sich bekannte Befestigungseinrichtung vorhanden sein.

Auch die Halteplatte 62 weist eine Bohrung 625 auf, welche dazu eingerichtet ist, das zweite Ende 12 des Schaftes 10 aufzunehmen. Auch in der Bohrung 625 kann eine Klebeverbindung oder eine Schweißverbindung Verwendung finden. In einigen Ausführungsformen kann die Halteplatte 62 zusammen mit dem Schaft 10 im Spritzgussverfahren stoffschlüssig geformt werden oder wie die Gewindehülse 61 im Spritzguss gefügt werden.

Der Schaft 10 kann ein Thermoplast oder ein Duroplast enthalten. In einigen Ausführungsformen der Erfindung kann der Schaft 10 ein Epoxidharz, ein Polyesterharz, ein Polyethylen, Polyamid oder Polyimid enthalten oder daraus bestehen. Optional kann der Schaft 10 und/oder die Halteplatte 62 eine Faserverstärkung enthalten, um die mechanische Belastbarkeit zu erhöhen.

Innerhalb des Schaftes 10 verläuft die Fangvorrichtung 2 in Form eines Drahtes aus einem Metall oder einer Legierung. In anderen Ausführungsformen der Erfindung kann auch eine Mehrzahl von Drähten verwendet werden, welche ihrerseits wieder miteinander verflochten oder verstrickt sind, um den lastaufnehmenden Querschnitt zu vergrößern und die Bruchlast der Fangvorrichtung 2 zu erhöhen.

Die Fangvorrichtung 2 ist innerhalb des Schaftes 10 eingebettet und auf diese Weise vor mechanischer Beschädigung oder Korrosion geschützt. Die Fangvorrichtung 2 weist eine größere Länge auf als der Schaft 10, so dass deren Wärmewiderstand weiter erhöht ist. Hierzu kann die Fangvorrichtung 2 mäanderförmig im Schaft 10 angeordnet sein.

Bei Versagen des Schaftes 10, beispielsweise durch Bruch oder durch Brandeinwirkung, senkt sich die Halteplatte 62 gegenüber der Gewindehülse 1 solange ab, bis die Fangvorrichtung 2 gestreckt ist und den an der Halteplatte 62 befindlichen Gegenstand hält. Da in diesem Fall die in Figur 3 gezeigte horizontale Stellung des Schaftes 10 aufgehoben ist und die Fangvorrichtung 2 mit ihrer Längserstreckung in Kraftrichtung verläuft, kann die Fangvorrichtung 2 trotz ihres geringeren Querschnittes die aufgebrachte Last tragen und ein Herunterfallen zuverlässig verhindern. Hierzu ist die Fangvorrichtung 2 an ihrem ersten Ende 21 mit der Gewindehülse 61 verbunden, beispielsweise durch Löten, Kleben oder Schweißen. Ebenso ist das gegenüberliegende zweite Ende 22 der Fangvorrichtung 2 mit der Halteplatte 62 verbunden. Auch hier kann eine Löt-, Klebe- oder Schweißverbindung Verwendung finden.

Figur 4 zeigt eine dritte Ausführungsform der Erfindung im Querschnitt. Auch in diesem Fall sind gleiche Bestandteile der Erfindung mit gleichen Bezugszeichen versehen. Der wesentliche Unterschied zur vorstehend beschriebenen zweiten Ausführungsform besteht darin, dass die Fangvorrichtung 2 nicht innerhalb des Schaftes 10 verläuft, sondern außerhalb des Schaftes 10. Die Fangvorrichtung 2 ist hierzu nach Art einer Spiralfeder um den Schaft 10 gewickelt. Die Fangvorrichtung 2 muss somit nicht bei der Herstellung des Schaftes 10 eingebettet werden, sondern kann nachträglich angebracht werden, wodurch sich die Endmontage der Befestigungsvorrichtung 1 einfacher darstellen kann. Darüber hinaus steht ein größerer Querschnitt für den Schaft 10 zur Lastaufnahme zur Verfügung, sodass die Haltekräfte erhöht sein können.

Weiterhin erlaubt diese Ausführungsform, nahezu identische Befestigungsvorrichtungen 1 mit und ohne Fangvorrichtung 2 zu vertreiben, indem Halteplatte 62, Gewindehülse 61 und Schaft 10 identisch gefertigt werden und nur die Fangvorrichtung 2 fallweise zusätzlich in einem weiteren Fertigungsschritt angebracht wird.

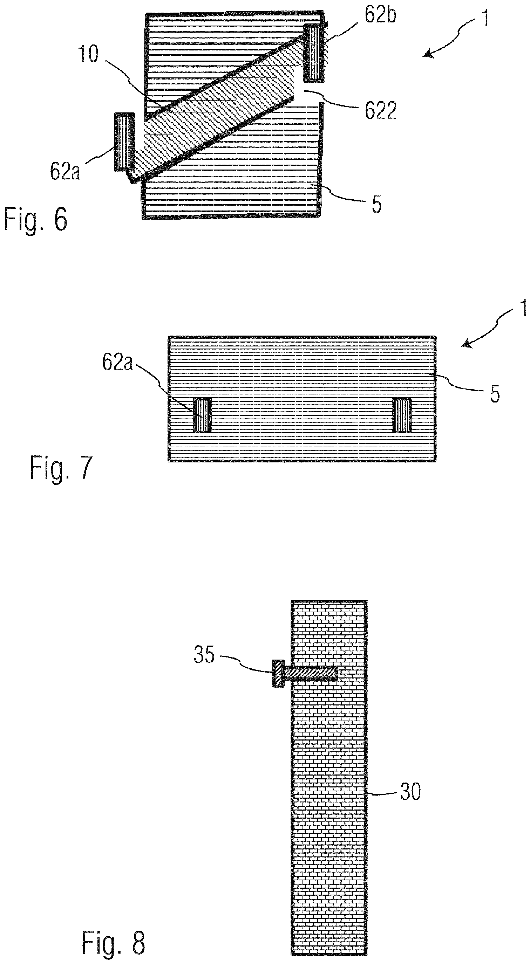

Anhand der Figuren 5 bis 14 wird eine vierte Ausführungsform der Erfindung näher erläutert. Dabei zeigen die Figuren 5 bis 7 die Herstellung der Befestigungsvorrichtung und die Figuren 8 bis 14 zeigen die Endmontage der Befestigungsvorrichtung.

Figur 5 zeigt eine Befestigungsvorrichtung 1, welche einen Schaft 10 aufweist, welcher beidseitig mit Halteplatten 62a und 62b versehen ist. Die Halteplatten 62a und 62b können Edelstahl enthalten oder aus Edelstahl bestehen. Zwischen dem Schaft 10 und den Halteplatten 62 kann eine Ausnehmung 622 vorhanden sein, welche zur Aufnahme eines Schraubenkopfes oder einer Montageplatte oder eines Hakens vorgesehen ist.

Vor der Herstellung des Schaftes 10 aus einem Kunststoffmaterial sind die Halteplatten 62a und 62b durch Punktschweißen mit den Enden eines Drahtes versehen, welcher nachfolgend aufgewickelt und innerhalb des Schaftes 10 angeordnet wird.

Figur 6 zeigt, wie das in Figur 5 dargestellte Halbzeug in eine Dämmplatte 5 eingebracht wird. Die Dämmplatte 5 kann beispielsweise ein Schaumglas oder einen Hartschaum enthalten oder daraus bestehen. Der Schaft 10 verläuft innerhalb der Dämmplatte so, dass die Halteplatten 62a und 62b parallel zu den Außenflächen der Dämmplatte 5 oder innerhalb der durch die Außenflächen aufgespannten Ebenen verlaufen und der Schaft 10 mit dem Normalenvektor der Dämmplatte einen Winkel von etwa 15° bis etwa 45° einschließt. Hierdurch kann die mechanische Spannung innerhalb des Schaftes 10 gegenüber einer horizontalen Anordnung reduziert sein, sodass die Tragfähigkeit erhöht ist. Darüber hinaus kann die Dämmplatte 5 bei Verformung des Schaftes 10 ebenfalls Kräfte aufnehmen und an eine Wand 30 abtragen, wie nachstehend beschrieben wird.

Figur 7 zeigt die in Figur 6 im Schnitt dargestellte Dämmplatte in der Ansicht. Es ist erkennbar, dass die Dämmplatte 5 eine in etwa rechteckige Grundform aufweist und zwei Befestigungsvorrichtungen mit jeweils zugeordneten Halteplatten 62a und 62b und zugeordneten Schäften 10 aufnimmt. Die Dicke der Dämmplatte 5 kann in einigen Ausführungsformen der Erfindung zwischen etwa 150 mm und etwa 300 mm betragen. Das in den Figuren 6 und 7 dargestellte Element kann im Herstellwerk vorgefertigt, verpackt und an die Baustelle geliefert werden. Die dortige Montage an einem Gebäude 3 erläutern nachfolgend die Figuren 8 bis 14.

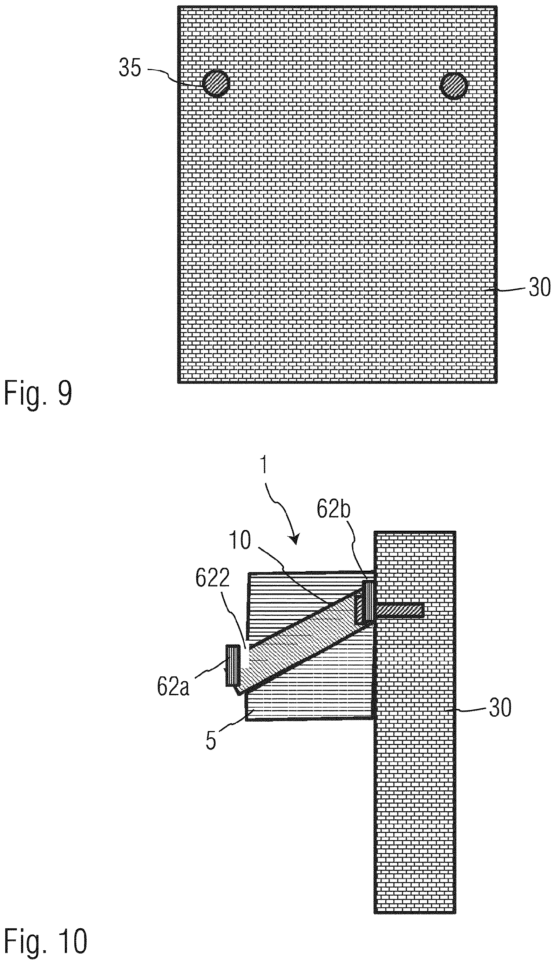

Die Figur 8 zeigt eine Wand 30 eines Gebäudes im Schnitt. Figur 9 zeigt den Ausschnitt aus der Wand 30 in der Ansicht. Wie aus Figur 8 und Figur 9 ersichtlich ist, wird zunächst in der Wand 30 zumindest eine Bohrung angebracht, in welche eine Schraube 35 mit einem Schraubenkopf befestigt wird. Dabei weist der Schraubenkopf einen größeren Durchmesser auf als der Schraubenschaft der Schraube 35. Die Schraube 35 kann mit an sich bekannten Spreizdübeln oder Klebeankern in der Wand 30 befestigt werden. Die Wand 30 ist im dargestellten Ausführungsbeispiel als Massivbauwand ausgeführt, kann in anderen Ausführungsformen der Erfindung jedoch andere Bauweisen aufweisen. Wie Figur 9 zeigt, sind zur Aufnahme der Befestigungsvorrichtung gemäß der vierten Ausführungsform der Erfindung zwei Schrauben 35 in der Wand 30 angebracht, deren Abstand zueinander dem Abstand der Befestigungsplatten 62b innerhalb der Dämmplatte 5 entspricht.

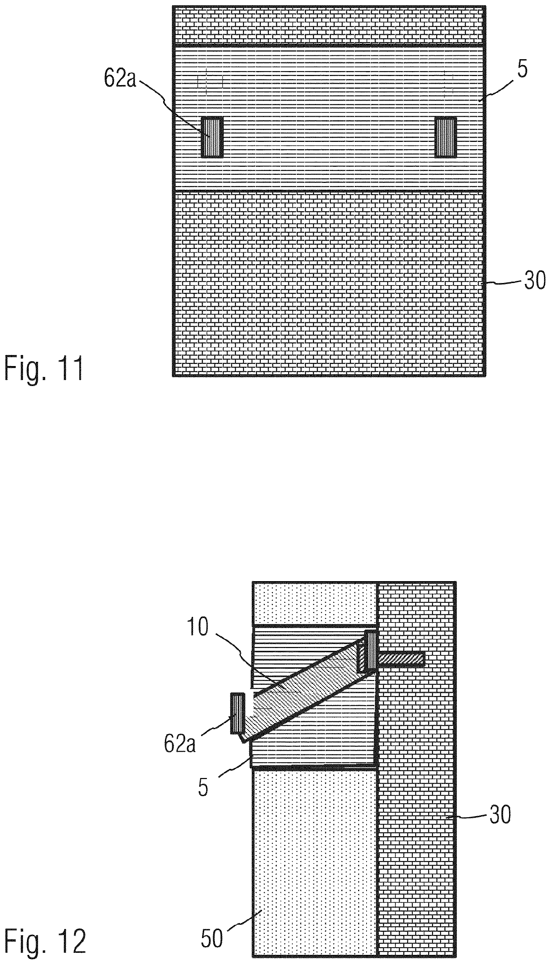

Die Figuren 10 und 11 erläutern sodann die Montage der Befestigungsvorrichtung 1. Dabei zeigt Figur 10 wiederum die Wand 30 im Schnitt und Figur 11 eine Ansicht. Zur Montage wird die Halteplatte 62b so an der Wand 30 angeordnet, dass der Schraubenkopf der Schraube 35 in die Ausnehmung 622 eingreift. Durch Einwirken der Schwerkraft erfolgt eine formschlüssige Verbindung zwischen der Befestigungsvorrichtung 1 und der Wand 30. Damit ist ein Teil der Wandfläche der Wand 30 von der Dämmplatte 5 der Befestigungsvorrichtung 1 bedeckt, sodass die Halteplatten 62a zu deren Außenseite exponiert sind.

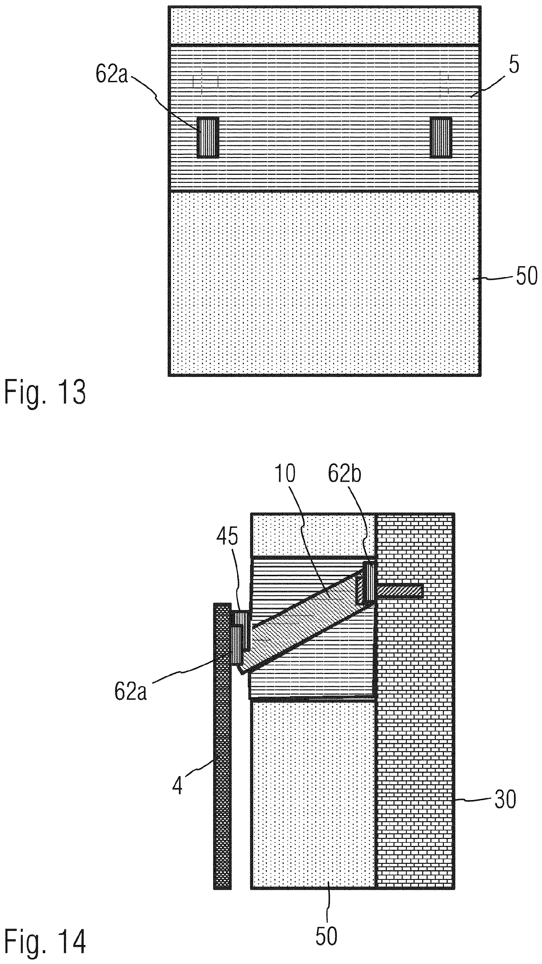

Die Figuren 12 und 13 zeigen den nächsten Montageschritt. Wiederum zeigt Figur 12 den Querschnitt und Figur 13 die Ansicht. Wie aus den Zeichnungen ersichtlich ist, werden die von der Befestigungsvorrichtung 1 unbedeckten Wandteile mit weiteren Dämmplatten 50 versehen. Die weiteren Dämmplatten 50 können in an sich bekannter Weise durch Anschrauben oder vollflächiges Verkleben mit der Wand 30 befestigt werden. Auch die weiteren Dämmplatten 50 können einen Hartschaum oder Blähglas enthalten. In einigen Ausführungsformen der Erfindung können die weiteren Dämmplatten 50 das identische Material aufweisen wie die Dämmplatte 5.

Die weiteren Dämmplatten 50 können die identische Dicke aufweisen wie die Dämmplatte 5 der Befestigungsvorrichtung 1.

An die so vorbereitete Fassade werden nun die Gegenstände 4 angehängt. Die Gegenstände 4, beispielsweise Verkleidungselemente, Photovoltaikmodule oder thermische Solarkollektoren, sind auf ihrer Rückseite mit Haken 45 versehen, welche in die Halteplatte 62 und die Ausnehmung 622 eingreifen. Auf diese Weise kann die Fassade vollflächig oder in Teilflächen mit den Gegenständen 4 behängt werden. Nach Fertigstellung der Fassade werden die von den Gegenständen 4 aufgebrachten Kräfte über den Schaft 10 auf die Halteplatte 62b übertragen und von dort über die Schraube 35 in die Wand 30 eingeleitet. Wenn der Schaft 10 beschädigt wird, beispielsweise durch Brand, hängen die Gegenstände 4 weiterhin an der Fangvorrichtung 2, welche sodann die Kraftübertragung von der Halteplatte 62a auf die Halteplatte 62b und die Schraube 35 übernimmt. Ein Herunterfallen der Gegenstände 4 wird auch bei Beschädigung des Schaftes 10 zuverlässig vermieden.

Sofern die Ansprüche und die vorstehende Beschreibung "erste" und "zweite" Ausführungsformen definieren, so dient diese Bezeichnung der Unterscheidung zweier gleichartiger Ausführungsformen, ohne eine Rangfolge festzulegen.

## Patentansprüche

1. Befestigungsvorrichtung (1) zur Montage eines Gegenstandes (4) an einem Gebäude (3), mit einem Schaft (10) mit einem ersten Ende (11) und einem zweiten Ende (12), wobei der Schaft (10) dazu eingerichtet ist, vom Gegenstand (4) in die Befestigungsvorrichtung (1) eingeleitete Kräfte über das Gebäude (3) abzutragen, sowie einer Fangvorrichtung (2), **dadurch gekennzeichnet, dass** die Fangvorrichtung (2) entlang des Schaftes (10) verläuft und dazu eingerichtet ist, im Falle des Versagens des Schaftes (10) die vom Gegenstand (4) in die Befestigungsvorrichtung (1) eingeleiteten Kräfte über das Gebäude (3) abzutragen, wobei die Fangvorrichtung (2) eine größere Länge und/oder eine kleinere Querschnittsfläche aufweist als der Schaft (10).

2. Vorrichtung nach Anspruch 1, **dadurch gekennzeichnet, dass** der Schaft (10) zumindest ein Polymer und optional eine Faserverstärkung enthält oder daraus besteht und/oder dass der Schaft (10) in einem Spritzgußverfahren herstellbar ist.

3. Vorrichtung nach Anspruch 1 oder 2, **dadurch gekennzeichnet, dass** die Fangvorrichtung (2) ein Metall oder eine Legierung enthält oder daraus besteht.

4. Vorrichtung nach einem der Ansprüche 1 bis 3, **dadurch gekennzeichnet, dass** die Fangvorrichtung (2) zumindest teilweise in das Material des Schaftes (10) eingebettet ist.

5. Vorrichtung nach einem der Ansprüche 1 bis 4, **dadurch gekennzeichnet, dass** die Fangvorrichtung mäanderförmig oder spiralförmig im oder am Schaft (10) verläuft.

6. Vorrichtung nach einem der Ansprüche 1 bis 5, **dadurch gekennzeichnet, dass** das erste Ende (11) und/oder das zweite Ende (12) des Schaftes (10) mit einem Gewinde und/oder einer Gewindehülse (61) aus einem Metall oder einer Legierung und/oder mit einem Schlagdübelkopf versehen ist und/oder dass
das zweite Ende (12) und/oder das erste Ende (11) des Schaftes (10) mit einer Halteplatte (62) versehen ist.

7. Vorrichtung nach einem der Ansprüche 1 bis 6, **dadurch gekennzeichnet, dass** der Schaft (10) in eine Dämmplatte (5) eingebettet ist.

8. Vorrichtung nach Anspruch 7, **dadurch gekennzeichnet, dass** der Schaft (10) mit dem Normalenvektor der Dämmplatte (5) einen Winkel von etwa 15° bis etwa 45° oder von etwa 20° bis etwa 30° einschließt.

9. Verwendung einer Vorrichtung nach einem der Ansprüche 1 bis 8 zur Montage eines Fassadenelementes oder eines Photovoltaikmoduls, insbesondere eines Fassadenelementes aus Glas oder Naturstein oder Keramik.

10. Verfahren zur Herstellung einer Befestigungsvorrichtung (1) nach einem der Ansprüche 1 bis 8 zur Montage eines Gegenstandes (4) an einem Gebäude (3), mit einem Schaft (10) mit einem ersten Ende (11) und einem zweiten Ende (12), **dadurch gekennzeichnet, dass** eine Fangvorrichtung (2) in eine Spritzgussform des Schaftes (10) eingelegt und mit einem Polymer umspritzt wird, wobei die Fangvorrichtung (2) eine größere Länge und/oder eine kleinere Querschnittsfläche aufweist als der Schaft (10).

11. Verfahren nach Anspruch 10, **dadurch gekennzeichnet, dass** am ersten Ende (11) und/oder am zweiten Ende (12) des Schaftes (10) eine Halteplatte (62) oder eine Gewindehülse (61) angebracht und mit der Fangvorrichtung (2) verbunden wird.

12. Verfahren nach einem der Ansprüche 10 oder 11, **dadurch gekennzeichnet, dass** die Fangvorrichtung ein Metall oder eine Legierung enthält oder daraus besteht.

13. Verfahren nach einem der Ansprüche 10 bis 12, **dadurch gekennzeichnet, dass** die Fangvorrichtung mäanderförmig oder spiralförmig in das Spritzgußwerkzeug eingelegt wird.

## Claims

1. Fixing device (1) for mounting an object (4) on a building (3), having a shaft (10) with a first end (11) and a second end (12), the shaft (10) being designed to transfer forces introduced into the fixing device (1) by the object (4) via the building (3), as well as having a safety catch (2),
**characterized in that**
the safety catch (2) runs along the shaft (10) and is designed to transfer the forces introduced into the fixing device (1) by the object (4) via the building (3) in the event of failure of the shaft (10), the safety catch (2) having a greater length and/or a smaller cross-sectional area than the shaft (10).

2. Device according to claim 1, **characterized in that** the shaft (10) contains or consists of at least one polymer and optionally a fiber reinforcement and/or **in that** the shaft (10) can be manufactured in an injection molding process.

3. Device according to claim 1 or 2, **characterized in that** the safety catch (2) contains or consists of a metal or an alloy.

4. Device according to any of claims 1 to 3, **characterized in that** the safety catch (2) is at least partially embedded in the material of the shaft (10).

5. Device according to any of claims 1 to 4, **characterized in that** the safety catch runs in a meandering or spiral manner in or on the shaft (10).

6. Device according to any of claims 1 to 5, **characterized in that** the first end (11) and/or the second end (12) of the shaft (10) is provided with a thread and/or a threaded sleeve (61) made of a metal or an alloy and/or with an impact plug head and/or **in that** the second end (12) and/or the first end (11) of the shaft (10) is provided with a retaining plate (62).

7. Device according to any of claims 1 to 6, **characterized in that** the shaft (10) is embedded in an insulation panel (5).

8. Device according to claim 7, **characterized in that** the shaft (10) encloses an angle of about 15° to about 45° or of about 20° to about 30° with a normal vector of the insulation panel (5).

9. Use of a device according to any of claims 1 to 8 for mounting a facade element or a photovoltaic module, in particular a facade element made of glass or natural stone or a ceramic material.

10. Method for manufacturing a fixing device (1) according to any of claims 1 to 8 for mounting an object (4) on a building (3), having a shaft (10) with a first end (11) and a second end (12), **characterized in that** a safety catch (2) is inserted into an injection mold of the shaft (10) and is extrusion-molded with a polymer, the safety catch (2) having a greater length and/or a smaller cross-sectional area than the shaft (10).

11. Method according to claim 10, **characterized in that** a retaining plate (62) or a threaded sleeve (61) is attached to the first end (11) and/or the second end (12) of the shaft (10) and is connected to the safety catch (2).

12. Method according to any of claims 10 or 11, **characterized in that** the safety catch contains or consists of a metal or an alloy.

13. Method according to any of claims 10 to 12, **characterized in that** the safety catch is inserted into the injection molding tool in a meandering or spiral manner.

## Revendications

1. Dispositif de fixation (1) pour monter un objet (4) sur un bâtiment (3), comprenant une tige (10) ayant une première extrémité (11) et une seconde extrémité (12), la tige (10) étant conçue pour transférer au bâtiment (3) les forces introduites par l'objet (4) dans le dispositif de fixation (1), et comprenant un dispositif de capture (2),
**caractérisé en ce que** le dispositif de capture (2) s'étend le long de la tige (10) et est conçu pour transférer au bâtiment (3) les forces introduites par l'objet (4) dans le dispositif de fixation (1), en cas de défaillance de la tige (10), le dispositif de capture (2) ayant une longueur plus grande et/ou une surface de section transversale plus petite que la tige (10).

2. Dispositif selon la revendication 1, **caractérisé en ce que** la tige (10) contient ou consiste en au moins un polymère et optionnellement en un renfort fibreux, et/ou **en ce que** la tige (10) peut être fabriquée par un procédé de moulage par injection.

3. Dispositif selon la revendication 1 ou 2, **caractérisé en ce que** le dispositif de capture (2) contient ou consiste en un métal ou en un alliage.

4. Dispositif selon l'une des revendications 1 à 3, **caractérisé en ce que** le dispositif de capture (2) est au moins partiellement encastré dans le matériau de la tige (10).

5. Dispositif selon l'une des revendications 1 à 4, **caractérisé en ce que** le dispositif de capture s'étend en forme de méandres ou en spirale dans ou sur la tige (10).

6. Dispositif selon l'une des revendications 1 à 5, **caractérisé en ce que** la première extrémité (11) et/ou la seconde extrémité (12) de la tige (10) est pourvue d'un filetage et/ou d'un manchon fileté (61) en un métal ou en un alliage et/ou d'une tête de cheville à percussion, et/ou **en ce que** la seconde extrémité (12) et/ou la première extrémité (11) de la tige (10) est pourvue d'une plaque de retenue (62).

7. Dispositif selon l'une des revendications 1 à 6, **caractérisé en ce que** la tige (10) est encastrée dans une plaque isolante (5).

8. Dispositif selon la revendication 7, **caractérisé en ce que** la tige (10) forme un angle d'environ 15° à environ 45° ou d'environ 20° à environ 30° avec le vecteur normal de la plaque isolante (5).

9. Utilisation d'un dispositif selon l'une des revendications 1 à 8 pour monter un élément de façade ou d'un module photovoltaïque, en particulier un élément de façade en verre ou en pierre naturelle ou en céramique.

10. Procédé de fabrication d'un dispositif de fixation (1) selon l'une des revendications 1 à 8 pour monter un objet (4) sur un bâtiment (3), comprenant une tige (10) ayant une première extrémité (11) et une seconde extrémité (12), **caractérisé en ce qu'**un dispositif de capture (2) est posé dans un moule d'injection de la tige (10) et est surmoulé avec un polymère, le dispositif de capture (2) présentant une longueur plus grande et/ou une surface de section transversale plus petite que la tige (10).

11. Procédé selon la revendication 10, **caractérisé en ce qu'**une plaque de retenue (62) ou un manchon fileté (61) est fixé(e) à la première extrémité (11) et/ou à la seconde extrémité (12) de la tige (10) et est relié(e) au dispositif de capture (2).

12. Procédé selon l'une des revendications 10 ou 11, **caractérisé en ce que** le dispositif de capture contient ou consiste en un métal ou en un alliage.

13. Procédé selon l'une des revendications 10 à 12, **caractérisé en ce que** le dispositif de capture est posé en forme de méandres ou en spirale dans l'outil de moulage par injection.
